(19) Europäisches Patentamt
European Patent Office
Office européen des brevets

(11) **EP 2 852 235 A1**

(12) **EUROPEAN PATENT APPLICATION**
published in accordance with Art. 153(4) EPC

(43) Date of publication:
**25.03.2015 Bulletin 2015/13**

(21) Application number: **13790305.0**

(22) Date of filing: **23.04.2013**

(51) Int Cl.:
**H04W 72/04** (2009.01)

(86) International application number:
**PCT/CN2013/074564**

(87) International publication number:
**WO 2013/170687 (21.11.2013 Gazette 2013/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.05.2012 CN 201210156809**

(71) Applicant: **Sony Corporation**
**Tokyo 108-0075 (JP)**

(72) Inventors:
• **CUI, Qimei**
**Beijing 100876 (CN)**

• **ZHANG, Yingni**
**Beijing 100876 (CN)**
• **WANG, Hui**
**Beijing 100876 (CN)**
• **LI, Xiaona**
**Beijing 100876 (CN)**

(74) Representative: **Jackson, Jonathan Andrew**
**D Young & Co LLP**
**120 Holborn**
**London EC1N 2DY (GB)**

(54) **COMMUNICATION METHOD AND DEVICE IN WIRELESS COMMUNICATION SYSTEM**

(57)     Disclosed are a communication method and device in a wireless communication system, the communication method comprising: a base station in the communication system determines, according to the current system configuration of the communication system, the category of an enhanced control channel element configuration in an enhanced physical downlink control channel, the enhanced control channel element configuration comprising the number of resource elements in each enhanced control channel element, and the number of enhanced control channel elements in each physical resource block pair, and the enhanced control channel element configuration is classified into a plurality of categories respectively corresponding to the different system configurations of the communication system; and notifying a terminal node in the communication system of the information related to the determined category of the enhanced control channel element configuration.

Determining the classification of an eCCE configuration in corresponding ePHCCH accordingto current system configuration — 102

Transmitting the information on the determined classification of the eCCE configuration to a terminal node — 104

Fig.1

**Description**

TECHNICAL FIELD

The present disclosure relates to the filed of wireless communication, and particularly to a communication method, a communication device and a wireless communication system including such a communication device which are used in for example subsequent evolution (LTE-A) of long term evolution of a Universal Mobile Telecommunication System (UMTS).

BACKGROUND ART

Long Term Evolution (LTE) of Universal Mobile Telecommunication System (UMTS) technique is the biggest novel technique development project launched by the 3rd Generation Partnership Project (3GPP) in recent years. This technique can be regarded as "quasi-4G technique". LTE-A (LTE-Advanced) is subsequent evolution of LTE. 3GPP completed a technique demand report of LTE-A in 2008, addressing the following minimum demands of the LTE-A: a downlink peak rate is IGbps, an uplink peak rate is 500Mbps, and uplink and downlink peak spectrum utilization rates reach 15Mbps/Hz and 30Mbps/Hz respectively. In order to satisfy various demand indices of 4G technique, 3GPP proposes several key techniques directed to LTE-A, including carrier aggregation, coordinated multi-point transmission and reception, relay transmission and multi-antenna enhancement, etc.

A Physical Downlink Control Channel (PDCCH) carried Downlink Control Information (DCI), including resource allocation information and other control information on one or more User Equipments (UEs). In the LTE, both uplink and downlink resource scheduling information are carried by the PDCCH. Generally speaking, in one sub-frame there may be a plurality of PDCCHs. A user necessarily demodulates the DCI in the PDCCHs first in order to demodulate Physical Downlink Share Channel (PDSCH: including broadcast messages, paging, data of UEs, etc.) of the user's own at corresponding resource positions.

Presently, in view of scheduling demands of the key techniques such as carrier aggregation, coordinated multi-point transmission and reception, relay transmission and multi-antenna enhancement and so on, an Enhanced Physical Downlink Control Channel (ePDCCH) is proposed in 3GPP normalization, for enlarging capacity of control information, and making it possible to support techniques such as beamforming, diversity, deletion of interference between cells and so on. Since co-existence with a PDCCH in a previous version 10 (e.g. R10) is desired, the ePHCCH will not occupy a region of the previous PDCCH, but shares resources of data domains with a PDSCH. In this regard, it is necessary to re-design the configuration of the ePDCCH.

SUMMARY OF THE INVENTION

In respect of the above defects, some embodiments of the disclosure provide a communication method, device and system, wherein a configuration scheme of an enhanced Physical Downlink Control Channel (ePDCCH) as adopted can effect efficient utilization of downlink resources, improve transmission performance and enable excellent compatibility with a PDCCH in R10 (3GPP Release 10).

Brief descriptions of the disclosure will be made hereinafter, so as to provide basic understandings to some aspects of the disclosure. It should be understood that such brief descriptions are not enumerative descriptions in regard to the disclosure. The brief descriptions neither intend to determine the key or important parts of the disclosure nor intend to limit the scope of the disclosure, but aim only to provide some concepts in a simplified manner, which serve as a preamble of more detailed descriptions provided later.

According to one aspect of the disclosure, a communication method in a wireless communication system is provided. The communication method may include: determining, by a base station in the communication system, a classification of configuration of enhanced control channel elements in an enhanced physical downlink control channel according to current system configuration of the communication system, wherein the configuration of enhanced control channel elements includes number of resource elements in each enhanced control channel element and number of enhanced control channel elements in each physical resource block pair, and wherein the configuration of enhanced control channel elements is classified into a plurality of classifications which respectively correspond to different system configurations of the communication system; and notifying a terminal node in the communication system of an information on the determined classification of the configuration of enhanced control channel elements.

According to another aspect of the disclosure, a communication method in a wireless communication system is further provided. The communication method may include: receiving, by a terminal node in the communication system from a base station in the communication system, information on classification of configuration of enhanced control channel elements, wherein the configuration of enhanced control channel elements includes number of resource elements in each enhanced control channel element and number of enhanced control channel elements in each physical resource block pair, and wherein the configuration of enhanced control channel elements is classified into a plurality of classifications which respectively correspond to different system configurations of the communication system; and performing demodulation for the enhanced control channel elements according to the classification of the configuration of enhanced control channel elements.

According to another aspect of the disclosure, a communication device in a wireless communication system is further provided. The communication device is configured in a base station of the communication system and includes: a configuration classification determining device configured to determine a classification of configuration of enhanced control channel elements in an enhanced physical downlink control channel according to current system configuration of the communication system, wherein the configuration of enhanced control channel elements includes number of resource elements in each enhanced control channel element and number of enhanced control channel elements in each physical resource block pair, and wherein the configuration of enhanced control channel elements is classified into a plurality of classifications which respectively correspond to different system configurations of the communication system; and a transmitting device configured to notify a terminal node in the communication system of an information on the determined classification of the configuration of enhanced control channel elements.

According to another aspect of the disclosure, a communication device in a wireless communication system is further provided. The communication device may be configured in a terminal node of the communication system and include: a receiving device configured to receive information on classification of configuration of enhanced control channel elements transmitted from a base station in the communication system, wherein the configuration of enhanced control channel elements includes number of resource elements in each enhanced control channel element and number of enhanced control channel elements in each physical resource block pair, and wherein the configuration of enhanced control channel elements is classified into a plurality of classifications which respectively correspond to different system configurations of the communication system; and a processing device configured to perform demodulation for the enhanced control channel elements according to the classification of the configuration of enhanced control channel elements.

According to another aspect of the disclosure, a communication method in a wireless communication system is further provided. The method may include: determining, by a base station in the communication system, a classification of configuration of enhanced control channel elements in an enhanced physical downlink control channel according to current system configuration of the communication system, wherein the configuration of enhanced control channel elements includes number of resource elements in each enhanced control channel element and number of enhanced control channel elements in each physical resource block pair, and wherein the configuration of enhanced control channel elements is classified into a plurality of classifications which respectively correspond to different system configurations of the communication system; notifying, by the base station, a terminal node in the communication system of an information on the determined classification of the configuration of enhanced control channel elements; receiving, by the terminal node, the information on the classification of the configuration of enhanced control channel elements transmitted from the base station; and performing, by the terminal node, demodulation for the enhanced control channel elements according to the classification of the configuration of enhanced control channel elements.

According to another aspect of the disclosure, a wireless communication system is further provided. The system includes a base station and a terminal node. The base station may include: a configuration classification determining device configured to determine a classification of configuration of enhanced control channel elements in an enhanced physical downlink control channel according to current system configuration of the communication system, wherein the configuration of enhanced control channel elements includes number of resource elements in each enhanced control channel element and number of enhanced control channel elements in each physical resource block pair, and wherein the configuration of enhanced control channel elements is classified into a plurality of classifications which respectively correspond to different system configurations of the communication system; and a transmitting device configured to notify a terminal node in the communication system of an information on the determined classification of the configuration of enhanced control channel elements, and wherein the terminal node includes: a receiving device configured to receive the information on the classification of the configuration of enhanced control channel elements transmitted from the base station; and a processing device configured to perform demodulation for the enhanced control channel elements according to the classification of the configuration of enhanced control channel elements.

In addition, the disclosure further provides a computer program for carrying out the above method.

In addition, the disclosure also provides at least a computer program product in the form of a computer-readable medium, on which computer program code for carrying out the above method is recorded.

BRIEF DESCRIPTION OF THE DRAWINGS

The above and other objects, features and advantages of the disclosure would be understood more easily with reference to the following descriptions in regard to the embodiments of the disclosure combined with the appended drawings. The components in the appended drawings are not plotted in proportion, but aim only to show the principle of the disclosure. In the appended drawings, identical or similar technical features or components will be denoted by using identical or similar reference signs.

FIG. 1 is a schematic flow view illustrating a communication method in a wireless communication system according to one embodiment of the disclosure;

FIG. 2 is a schematic flow view illustrating a detailed example of a communication method of dynamically selecting configuration of an enhanced Physical Downlink Control Channel (ePDCCH) adapted to current system configuration;

FIG. 3 is a schematic flow view illustrating a communication method in a wireless communication system according to one embodiment of the disclosure;

FIG. 4 is a schematic flow view illustrating a detailed example of receiving eCCE configuration information by a terminal node;

FIG. 5 is a schematic view illustrating an example of a resource occupying case of one physical resource block pair in one system configuration;

FIG. 6 is a schematic flow view illustrating a communication method according to another embodiment of the disclosure;

FIGS. 7(A)-(D) are views illustrating a detailed example of an eCCE mapping manner;

FIG. 8 is a schematic block diagram illustrating a structure of a communication device in a radio system according to one embodiment; and

FIG. 9 is a schematic block diagram illustrating a structure of a communication device in a radio system according to another embodiment;

## DETAILED DESCRIPTION OF THE EMBODIMENTS

Hereinafter, embodiments of the disclosure will be described with reference to the appended drawings. Elements and features described in one figure or one embodiment of the disclosure may be combined with those shown in one or more other figures or embodiments. It should be noted that, for the purpose of clarity, representations and descriptions of components and processing known to a person skilled in the art which are not related to the disclosure are omitted in the appended drawings and descriptions thereof.

Some embodiments of the disclosure provide a communication method and device in a wireless communication system, as well as a communication system adopting such a method or using such a device, wherein a configuration scheme of an Enhanced Physical Downlink Control Channel as adopted (for example including a size of an Enhanced Control Channel Element and/or a multiplexing manner of an Enhanced Control Channel Element in a resource block and/or a mapping demodulation scheme of vacant Resource Elements (REs), etc.) can effect efficient utilization of downlink resources, improve transmission performance and enable excellent compatibility with a PDCCH in R10.

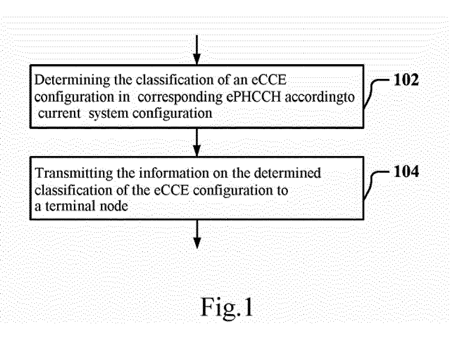

FIG. 1 is a schematic flow view illustrating a communication method in a wireless communication system according to one embodiment of the disclosure. The method as illustrated in FIG. 1 is carried out at a base station side of the communication system.

As shown in FIG. 1, the method comprises Steps 102 and 104.

In Step 102, a classification of configuration of enhanced Control Channel Elements (eCCEs) in an ePDCCH is determined by a base station in the communication system according to a current system configuration of the communication system.

One ePDCCH may carry one or more eCCEs. A size of the eCCE, i.e. the number of Resource Elements (REs) in the eCCE, directly influences a setting of a search space, a link level performance and a capacity of the ePDCCH, etc. Therefore, the size of the eCCE is one of important indices of the configuration of the ePDCCH. In the present embodiment, the eCCE configuration in the ePDCCH may comprise a size of each eCCE (i.e. the number of resource elements in each eCCE), the number of eCCEs in each Physical Resource Block pair (PRB pair), etc.

In the present embodiment, the eCCE configuration in the ePDCCH is classified into a plurality of classifications which respectively correspond to different system configurations of the communication system. In other words, the plurality of system configurations of the communication system may be divided into a plurality of classifications, and correspondingly, the eCCE configurations in the ePDCCH of different classifications corresponding thereto may be defined, that is, each system configuration may correspond to an eCCE configuration of a corresponding classification. In this way, the base station can dynamically select an eCCE configuration of a corresponding classification according to current system configuration of the communication system.

Then, in Step 104, the base station notifies a terminal node in the communication system of an information on the determined classification of the configuration of enhanced control channel elements.

It is noted that, in the disclosure, the terminal node refers to a user node UE, such as a mobile terminal and so on, in the communication system.

The base station may transmit the information on the determined classification of the configuration of enhanced control channel elements in any proper manner. As an example, extension of an existing Physical Downlink Control Channel signaling (e.g. a legacy PDCCH signaling in R10 (an existing PDCCH signaling)) may be adopted to transmit the information, that is, the information is packaged into extended Physical Downlink Control Channel signaling and transmitted to the terminal node. This manner may enable excellent compatibility with the original R10 version, and utilize original control resources. As another example, an enhanced Physical Downlink Control Channel signaling (an ePDCCH signaling) may also be defined, that is, the information is packaged into a newly defined Physical Downlink Control Channel signaling and transmitted to the terminal node. This manner is simple and feasible, requires only an addition of a new signaling, and can be effected upon occupation of some vacant resources. As still as another example, an enhanced Physical Control Format Indication Channel signaling (ePCFICH signaling) may be defined, that is, the information is packaged in a newly defined ePCFICH signaling and transmitted to the terminal node. This manner can better distinguish the ePDCCH from the previous PDCCH, avoiding confusion in use. It should be understood that the ePDCCH signaling and the ePCFICH signaling may be defined in any proper format, which is not limited to any specific format by the disclosure and will not be described in detail herein either.

In the above communication method, the eCCE configuration in the ePDCCH is classified into a plurality of classifications which respectively correspond to different system configurations of the communication system, and the base station can select a corresponding eCCE configuration according to current system configuration of the communication system. In this way, it is made possible to reduce resource waste (that is, to reduce the number of "vacant REs"), and also it is made possible to improve adaptive performance of a link of the ePDCCH and to reduce possible signaling transmission expenses.

As an example, the system configuration of the communication system may comprise information such as number of Optical Frequency Division Multiple Access (OFDMA) symbols borne by the physical downlink control channel, number of reference signal ports and so on. Both the number of OFDMA symbols borne by the PDCCH and the number of reference signal ports will influence number of usable REs of the ePDCCH. Therefore, the classification of the configuration of the enhanced control channel elements may be determined according to the above configuration information. As a detailed example, in Step 102, the base station may determine the classification of the configuration of enhanced control channel elements according to number of resource elements usable to carry the enhanced physical downlink control channel in one physical resource block pair (or according to number of resource elements usable to carry the enhanced physical downlink control channel in one physical resource block pair and number of reference signal ports).

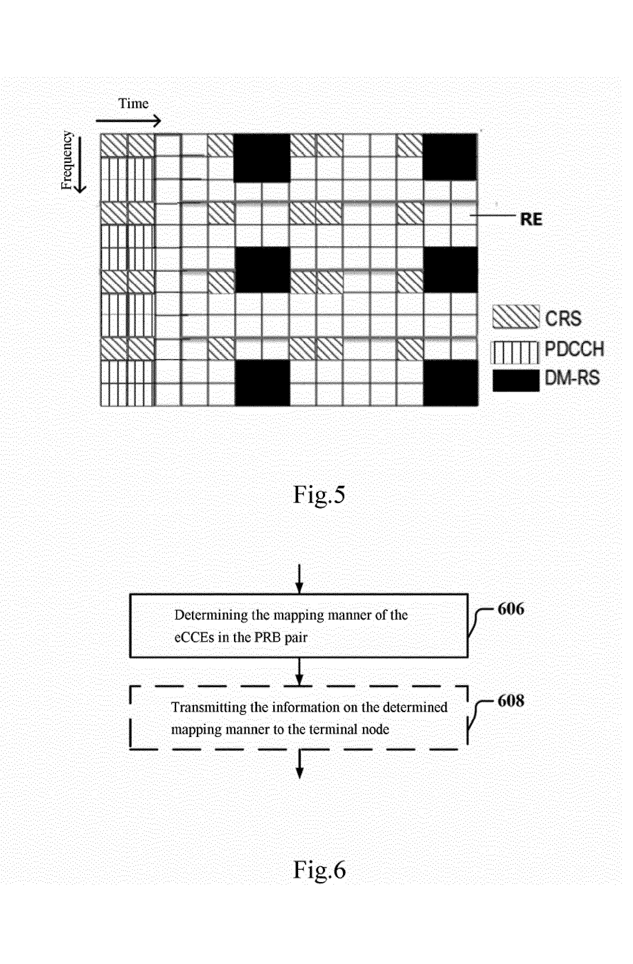

FIG. 5 illustrates an occupying case of one PRB pair in one system configuration, wherein one block represents one RE. A PDCCH occupies two OFDM symbols, a Common Reference Signal CRS uses four ports, a Demodulation Reference Signal DMRS uses four ports, and the remaining vacant REs are usable for carrying eCCEs.

Table 1 shows examples of numbers of usable REs in one PRB pair in the following different system configuration: the Demodulation Reference Signal DMRS is set to use four ports, and the PDCCH occupies different numbers of OFDM symbols and the CRS uses different numbers of ports.

Table 1

| RE/PRB pair | | Number of OFDMs Carried by PDCCH | | | |
|---|---|---|---|---|---|
| | | 0 | 1 | 2 | 3 |
| Number of Ports of Common Reference Signal | 0 | 144 | 132 | 120 | 108 |
| | 1 | 136 | 126 | 114 | 102 |
| | 2 | 128 | 120 | 108 | 96 |
| | 4 | 120 | 112 | 104 | 92 |

Table 2 shows examples of numbers of usable REs in one PRB pair in the following different system configurations: the Demodulation Reference Signal DMRS is set to use two ports, the PDCCH occupies different numbers of OFDM symbols and the CRS uses different numbers of ports.

Table 2

| RE/PRB pair | | Number of OFDMs Carried by PDCCH | | | |
|---|---|---|---|---|---|
| | | 0 | 1 | 2 | 3 |
| Number of Ports of Common Reference Signal | 0 | 152 | 148 | 128 | 116 |
| | 1 | 144 | 134 | 122 | 110 |
| | 2 | 136 | 128 | 116 | 104 |
| | 4 | 128 | 120 | 112 | 100 |

As a detailed example, the configuration of enhanced control channel elements may be classified into 4 corresponding classifications according to the number of OFDM symbols borne by the PDCCH and the number of reference sign ports. In this case, after determining a classification of the eCCE configuration corresponding to current system configuration, the base station may package information on the classification into a signaling of 2 bits (hereinafter referred to as a first signaling), and transmit the first signaling to the terminal node. Herein, as stated above, the first signaling may be an extension of an existing physical downlink control channel signaling, or may be a newly defined ePDCCH signaling or ePCFICH signaling, which will not be described in detail herein.

Hereinafter, a detailed example of determining the eCCE configuration according to the system configuration as shown in Table 1 will be described. Specifically, the eCCE configuration in the ePDCCH may be classified into the following 4 classifications according to number of resource elements usable to carry enhanced physical downlink control channel:

Classification 1: when the number of resource elements usable to carry enhanced physical downlink control channel is between 144-128, each eCCE may comprise 32 REs, and each physical resource block pair may carry 4 eCCEs;
Classification 2: when the number of resource elements usable to carry enhanced physical downlink control channel is between 126-120, each eCCE may comprise 30 REs, and each physical resource block pair may carry 4 eCCEs;
Classification 3: when the number of resource elements usable to carry enhanced physical downlink control channel is between 114-108, each eCCE may comprise 36 REs, and each physical resource block pair may carry 3 eCCEs;
Classification 4: when the number of resource elements usable to carry enhanced physical downlink control channel is between 104-92, each eCCE may comprise 30 REs, and each physical resource block pair may carry 3 eCCEs.

Hereinafter, another detailed example of determining the eCCE configuration according to the system configuration as shown in Table 2 will be described. Specifically, the eCCE configuration in the ePDCCH may be classified into the following 4 classifications according to number of resource elements usable to carry enhanced physical downlink control channel:

Classification 5: when the number of resource elements usable to carry enhanced physical downlink control channel is between 136-152, each eCCE may comprise 34 REs, and each physical resource block pair may carry 4 eCCEs;
Classification 6: when the number of resource elements usable to carry enhanced physical downlink control channel is between 128-134, each eCCE may comprise 32 REs, and each physical resource block pair may carry 4 eCCEs;
Classification 7: when the number of resource elements usable to carry enhanced physical downlink control channel is between 116-122, each eCCE may comprise 38 REs, and each physical resource block pair may carry 3 eCCEs;
Classification 8: when the number of resource elements usable to carry enhanced physical downlink control channel is between 100-112, each eCCE may comprise 33 REs, and each physical resource block pair may carry 3 eCCEs.

Tables 3 and 4 show determining relationships of the number of the usable REs with respect to the size of the eCCEs and the number of the eCCEs in the above 4 classifications of configurations of the eCCEs according to the system configurations as shown in Table 1 and Table 2, respectively.

Table 3

| Number of Usable REs | 128-144 (classification 1) | 120-126 (Classification 2) | 108-114 (Classification 3) | 92-104 (Classification 4) |
|---|---|---|---|---|
| Size of eCCEs & Number of eCCEs in One PRB Pair | 32RE/eCCE; 4 eCCEs | 30RE/eCCE; 4 eCCEs | 36RE/eCCE; 3 eCCEs | 30RE/eCCE; 3 eCCEs |

Table 3

| Number of Usable REs | 136-152 (classification 5) | 128-134 (Classification 6) | 116-122 (Classification 7) | 100-112 (Classification 8) |
|---|---|---|---|---|
| Size of eCCEs & Number of | 34RE/eCCE; 4 eCCEs | 32RE/eCCE; 4 eCCEs | 38RE/eCCE; 3 eCCEs | 33RE/eCCE; 3 eCCEs |
| eCCEs in One PRB Pair | | | | |

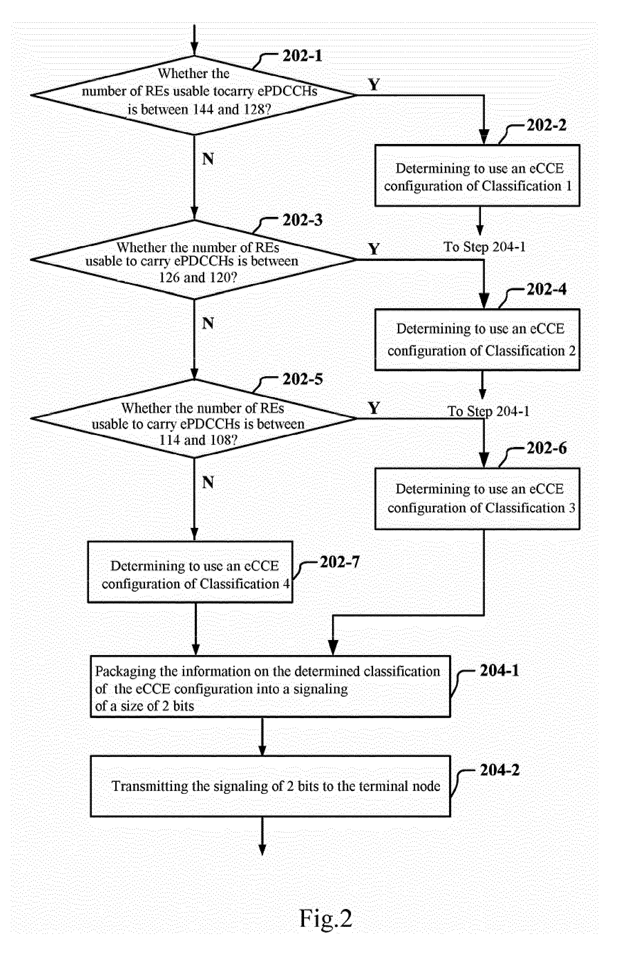

FIG. 2 illustrates a detailed example of a communication method of dynamically selecting an ePDCCH configuration adapted to current system configuration by using the eCCE configurations of the 4 classifications as shown in Table 3. In Step 202-1, it is judged whether the number of resource elements usable to carry enhanced physical downlink control channel is between 144 and 128, wherein if yes, the eCCE configuration of the Classification 1 would be selected in Step 202-2; otherwise, processing would proceed to Step 202-3. In Step 202-3, it is judged whether the number of resource elements usable to carry enhanced physical downlink control channel is between 126 and 120, wherein if yes, the eCCE configuration of the Classification 2 would be selected in Step 202-4; otherwise, processing would proceed to Step 202-5. In Step 202-5, it is judged whether the number of resource elements usable to carry enhanced physical downlink control channel is between 144 and 108, wherein if yes, the eCCE configuration of the Classification 3 would be selected in Step 202-6; otherwise, the eCCE configuration of the Classification 4 would be selected in Step 202-7. Then, in Step 204-1, information on the selected classification of the eCCE configuration is packaged into a signaling of 2 bits (as a detailed example, in the signaling, "00" may represent the Classification 1, "01" may represent the Classification 2, "10" may represent the Classification 3, "11" may represent the Classification 4, etc., which will not be described in detail herein), and in Step 204-2, the signaling is transmitted to the terminal node.

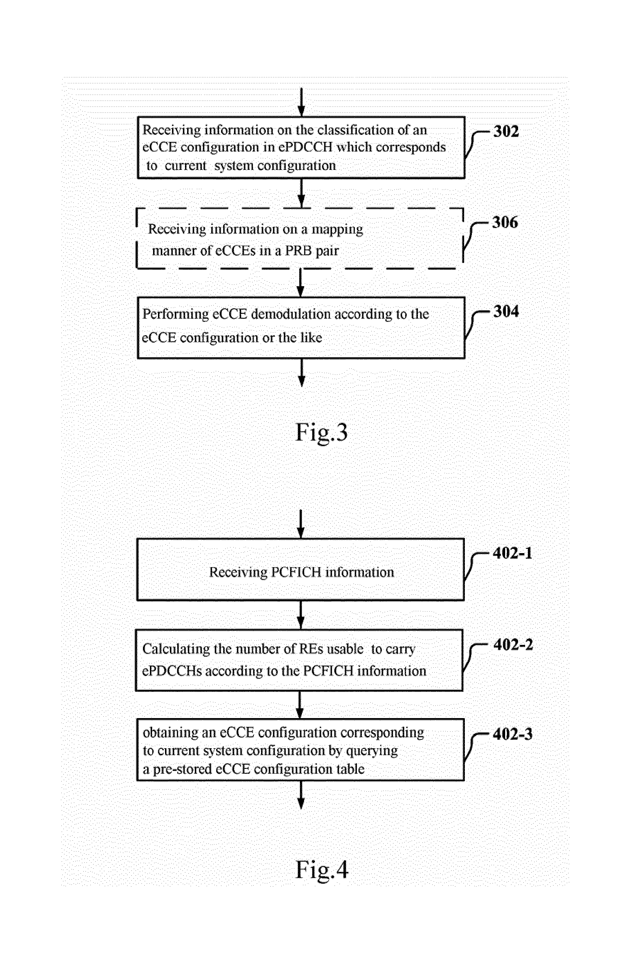

A size of a Control Channel Element (CCE) in the PDCCH is 36 (that is, in the PDCCH, one CCE comprises 36 REs), so in view of compatibility with the PDCCH, in the ePDCCH, number of REs in one eCCE may be made to change between 30 and 38 (for example 30, 32, 36 or 38). In this way, it is made possible to ensure that an amount of Downlink Control Information (DCI) borne in each eCCE is neither too small nor too large. In the above detailed example, the eCCE configuration is classified into 4 classifications, and by adopting this method, a waste rate of downlink resources is made relatively low (through calculation, the waste rate in this case is about 4%, while the waste rate is about 10% when the eCCE configuration is classified into two classifications). On the other hand, although more number of classifications leads to a lower waste rate of resources, a gain of a utilization rate of the resources becomes lower as the number of classifications increases, so in the case of too large number of classifications of the eCCE configuration, the adaptive process of the link of the ePDCCH through eCCE aggregation would become complicated, and when the base station needs to notify the terminal node of an information on current eCCE configuration, signaling expenses needed will increase as the number of classifications of the configuration of the eCCE increases. In the above embodiment, since 4 classifications of the configuration of the eCCEs are adopted, the first signaling only needs 2 bits. Therefore, by adopting the communication method as shown in FIG. 3, it is made possible to get excellent balance between the waste rate of resources and the signaling expenses.

As a detailed embodiment, correspondences between different system configurations and classifications of the eCCE configuration the may be pre-stored in the base station (for example, stored in a memory device of the base station). Upon obtainment of current system configuration, the base station may determine corresponding eCCE configurations according to the stored correspondences, and transmit information on the classifications of the configuration to the terminal node. Various types of information on the eCCE configuration may be pre-stored in the terminal node (for example, stored in a memory device of the terminal node). Upon obtainment of information on the classification of the eCCE configuration from the base station, the terminal node may query information corresponding to the classification according to the classification.

FIG. 3 is a schematic flow view illustrating a communication method of receiving information on the configuration of enhanced control channel elements at a terminal node side which corresponds to the method as shown in FIG. 1. As shown in FIG. 3, the method may comprise Steps 302 and 304.

In Step 302, the terminal node receives information on the classification of the configuration of the enhanced control channel elements from the base station.

Similarly to the embodiment described above, the configuration of the enhanced control channel elements mentioned herein comprises number of resource elements in each enhanced control channel element and number of enhanced control channel elements in each physical resource block pair, and the like. In addition, the configuration of the enhanced control channel elements is classified into a plurality of classifications which respectively correspond to different system configurations of the communication system. Detailed description will not be made herein.

In Step 304, the terminal node performs demodulation for the enhanced control channel elements according to the classification of the configuration of the enhanced control channel elements. Specifically, upon obtainment of the information on the classification of the eCCE configuration from the base station, the terminal node may query configuration information corresponding to the classification, in information on a plurality of pre-stored configurations of the eCCEs, according to the classification, and perform demodulation for the eCCEs according to the configuration information.

As a detailed example, the eCCE configuration may be classified into 4 classifications, for example, the 4 classifications as shown in the above Table 3 or Table 4. In this way, the base station may transmit, by means of a signaling of 2 bits (for example a first signaling), information for indicating the classification of the eCCE configuration which corresponds to current system configuration (as shown in Steps 204-1 and 204-2 in FIG. 2). Correspondingly, in Step 302, the terminal code may obtain the related information by receiving a signaling (for example a first signaling) of 2 bits in which the information on the classification of the configuration of enhanced control channel elements is packaged).

As an example, the terminal node may obtain the information on the classification of the eCCE configuration by means of a Physical control format indication channel (PCFICH). This method can excellently inherit signaling characteristics in the original R10 version and has excellent compatibility therewith, without needing to newly add any other signaling information; on the other hand, calculation of the terminal is not complicated at all. The PCFICH refers to a physical format indication channel dedicated for indicating number of OFDM symbols occupied by a PDCCH. The PCFICH is placed in a first OFDM symbol of each sub-frame, has a size of 2 bits, and actually delimits a control signaling region and a data region in each sub-frame. FIG. 4 illustrates a detailed example of receiving eCCE configuration information by using the PCFICH. As shown in FIG. 4, in Step 402-1, the terminal node receives the physical control format indication channel information. Specifically, the terminal node obtains number of OFDM symbols occupied by PDCCH transmission in current system configuration by demodulating the PCFICH information. Then, in Step 402-2, number of resource elements usable to carry the enhanced physical downlink control channel is received based on the information on physical control format indication channel. Specifically, the terminal node may obtain CPRS port number from system information by using the PCFICH information, and then number of REs currently usable to carry ePDCCHs is calculated. In Step 402-3, the terminal node obtains the classification of the configuration of enhanced control channel elements by querying a pre-stored table containing configurations of eCCEs (for example the information as shown in FIG. 2).

In the foregoing, a communication method in a wireless communication system is described, wherein corresponding classifications of the eCCE configuration are determined according to different system configurations, and information such as corresponding sizes of eCCEs and so on is defined in various classifications of the eCCE configuration. FIG. 6 illustrates a communication method according to another embodiment of the disclosure, wherein the base station further determines a mapping manner of enhanced control channel elements in a physical resource block pair.

Specifically, as shown in FIG. 6, in Step 606, the base station determines a mapping manner of enhanced control channel elements in a physical resource block pair. In the determined mapping manner, a plurality of enhanced channel control elements of each physical resource block pair may be mapped into the plurality of resource elements in a diagonally arranged pattern. The so-called diagonally arranged pattern refers to that, in each PRB pair, the same eCCE is diagonally arranged to be mapped into usable REs in a contigous and localized manner. In this way, a mapping rule during actual operation is simplified, that is, an actual mapping algorithm is made achievable more easily. In addition, the above diagonally arranged mapping pattern is actually to multiplex a plurality of eCCEs to one PRB pair by using a combined multiplxing method of time division multiplexing and frequency division multiplexing, wherein using the manner of time division multiplexing can reduce encoding time delay, using the manner of frequency division multiplexing can realize power balance, and using the manner of combination of the two has both the above advantages of the time division multiplexing and the frequency division multiplexing.

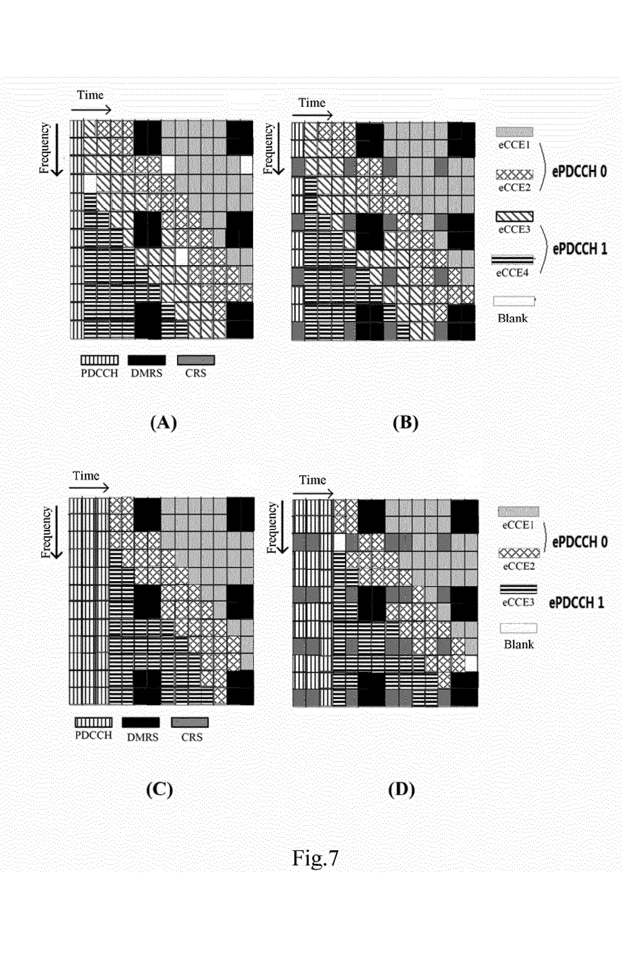

FIGS. 7(A)-(D) are schematic views illustrating mapping eCCEs in a diagonally arranged pattern in different classifications of the eCCE configuration respectively, wherein FIG. 7(A) illustrates an example of mapping when adopting the Classification 1 of the eCCE configuration; FIG. 7(C) illustrates an example of mapping when adopting the Classification 3 of the eCCE configuration; and FIG. 7(D) illustrates an example of mapping when adopting the Classification 4 of the eCCE configuration. Then, in Step 608, the base station notifies the terminal node of an information on the mapping manner It should be noted that the Step 608 is optional. In general cases, the base station does not need to transmit information on the mapping manner to the terminal node, as long as the base station and the terminal node have appointed in advance mapping manners used in various classifications of the eCCE configuration. Upon obtainment of information on the classification of the eCCE configuration from the base station, the terminal node can perform demodulation according to a mapping manner corresponding to the classification which has been appointed in advance.

As a detailed example, in a case where a plurality of enhanced channel control elements of each physical resource block pair is mapped into the plurality of resource elements in a diagonally arranged pattern, the terminal node may contiguously demodulate a plurality of resource elements in the physical resource block pair in a diagonally arranged pattern to obtain the respective enhanced channel control elements.

As an example, unoccupied resource elements in the physical resource block pair may be mapped in a uniformly distributed pattern, following each enhanced control channel element. In this case, the terminal node vacates and does not demodulate the unoccupied resource elements after performing the demodulation for each enhanced control channel element.

Hereinafter, a detailed example of mapping and demodulation for vacant REs will be described.

Firstly, a terminal of the base station obtains current system configuration, and calculates number N of REs usable for transmission of ePDCCHs according to current system configuration. Assuming that in a classification of the eCCE configuration corresponding to current system configuration a size of each eCCE is n and number of eCCEs borne in each PRB pair is x, the base station may calculate number Y of REs needed to be vacated after obtaining each eCCE mapping according to the following equation (1):

$$Y - \lfloor (n - N) * X) / X \rfloor (1)$$

In the above equation, symbol "⌊ ⌋" represents rounding downwards, wherein if exact division can be performed, number of vacant REs following each eCCE is equal; otherwise, the last surplus RE(s) would be mapped following the last one eCCE.

Then, the base station vacates Y REs according to the calculated numerical value of Y each time ePDCCH information on n REs is mapped. Generally, the base station and the terminal node may appoint in advance information on a mapping manner. Optionally, the base station may transmit the information on the mapping manner to the terminal node.

Correspondingly, at the terminal node, the terminal node acquires configuration information on eCCEs in current system configuration (for example by using the method described above, which will not be repeated described herein). Specifically, a size n of each eCCE and number x of eCCEs borne in each pair of PRBs are acquired.

Then, the terminal node acquires number Y of REs needed to be vacated after demodulation for each eCCE. As an example, Y may be notified to the terminal node by the base station by means of a signaling. As another example, the terminal node may calculate Y by using the following equation (2).

The terminal node may obtain current system configuration by demodulating a system signaling and original control channel information, and obtain number N of REs usable for transmission of ePDCCHs according to current system configuration (for example Table 1).

Thereafter, the terminal node calculates number Y of REs needed to be vacated after demodulation for each eCCE according to the following equation (2):

$$Y = \lfloor (n - N) * X) / X \rfloor \qquad (2)$$

According to the calculated value of Y, the terminal node vacates and does not demodulate Y REs each time ePDCCH information on n REs is demodulated.

As another example, unoccupied resource elements in the physical resource block pair may be mapped in a uniformly distributed pattern, preceding each enhanced control channel element. In this case, the terminal node skips the unoccupied resource elements after performing the demodulation for each enhanced control channel element. Specific steps are similar to those described in the above example, and will not be repeatedly described herein.

As a detailed example, the base station may also transmit a signaling (for example a first signaling) containing information for indicating a classification of the eCCE configuration which corresponds to current system configuration, by using the unoccupied resource elements (vacant REs) of the enhanced physical downlink control channel, to the terminal node. For example, in the above example, unoccupied resource elements in the physical resource block pair may be mapped in a uniformly distributed pattern, preceding each enhanced control channel element, and in this case the first signaling may be borne by using vacant REs located preceding eCCEs. The terminal node first demodulates the first signaling, and then demodulates eCCEs. Or, the first signaling may be placed in other vacant REs, and the terminal node receives information on a mapping pattern transmitted by the base station (or information on a mapping pattern which is appointed in advance by the terminal node and the base station), first performs demodulation according to the information to obtain the first signaling, and then demodulates eCCEs. Carrying the signaling containing information for indicating a classification of the eCCE configuration which corresponds to current system configuration by using vacant REs does not need to occupy new resources, making it possible to better utilize resources that would have been possibly wasted.

As a detailed embodiment, in the solution where a plurality of enhanced channel control elements of each physical resource block pair is mapped into the plurality of resource elements in a diagonally arranged pattern, the enhanced physical downlink control channel may be mapped into one physical resource block pair in a localized manner, or may be mapped into a plurality of physical resource block pairs in a distributed manner. Correspondingly, in the localized manner, the terminal node may perform demodulation for enhanced control channel elements in one physical resource block pair in a localized manner to obtain an enhanced physical downlink control channel; and in the distributed manner, the terminal node may perform demodulation for enhanced control channel elements in a plurality of physical resource block pairs to obtain an enhanced physical downlink control channel.

Hereinafter, a communication device in a wireless communication system according to some embodiments will be described.

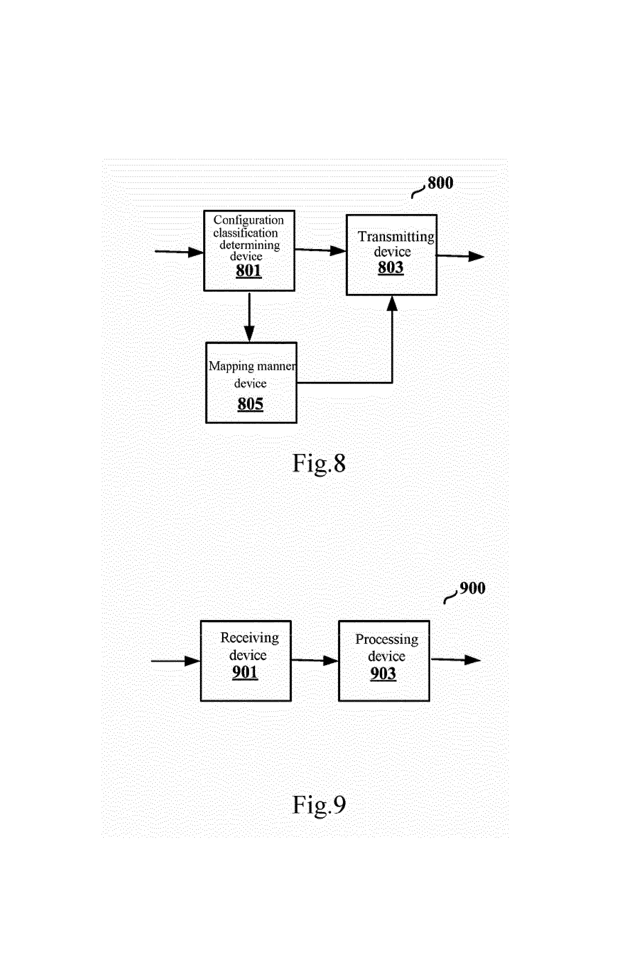

FIG. 8 is a schematic block diagram illustrating a structure of a communication device in a radio communication system according to one embodiment. The communication device 800 may be configured in a base station in the communication system.

As shown in FIG. 8, the communication device 800 may comprise a configuration classification determining device 801 and a transmitting device 803.

The communication device 800 may adopt the method described above with reference to FIGS. 1-7. For example, the configuration classification determining device 801 may determine a classification of configuration of enhanced control channel elements in an enhanced physical downlink control channel according to current system configuration of a communication system.

As stated above, the configuration of enhanced control channel elements may comprise number of resource elements in each enhanced control channel element and number of enhanced control channel elements in each physical resource block pair and the like, and the configuration of enhanced control channel elements is classified into a plurality of classifications which respectively correspond to different system configurations of the communication system and the like. As detailed examples, the system configuration may comprise number of OFDMA symbols borne by the physical downlink control channel and number of reference signal ports. The configuration classification determining device 801 may determine the classification of the configuration of enhanced control channel elements according to number of resource elements usable to carry the enhanced physical downlink control channel in one physical resource block pair.

As a detailed example, the configuration of enhanced control channel elements may be classified into 4 classifications corresponding to different system configurations of the communication system, for example, the 4 classifications as shown in the reference Table 3 or Table 4, which will not be repeatedly described herein.

The transmitting device 803 is used for notifying a terminal node in the communication system of an information on the classification of the configuration of enhanced control channel elements determined by the determining device 801. As a detailed example, for example, if the configuration of enhanced control channel elements may be classified into 4 classifications corresponding to different system configurations of the communication system, the transmitting device 803 may package the information on the determined classification of the configuration of enhanced control channel elements into a signaling (for example a first signaling) having 2 bits, and transmit the first signaling to the terminal node. As stated above, the first signaling may be an extension of an existing PDCCH signaling, and may also use an ePDCCH signaling or an ePCFICH signaling. For example, the first signaling may perform transmission by using vacant REs of ePDCCHs, which will not be repeatedly described herein.

Optionally, the device 800 may further include a mapping manner determining device 805. The mapping manner determining device 805 may determine a mapping manner of enhanced control channel elements in a physical resource block pair by using the method described above with reference to FIGS. 6-7. For example, the plurality of enhanced channel control elements of the physical resource block pair may be mapped into the plurality of resource elements in a diagonally arranged pattern (as shown in FIG. 7); and also for example, unoccupied resource elements in the physical resource block pair are mapped in a uniformly distributed pattern, following each enhanced control channel element, which will not be repeatedly described herein.

The transmitting device 803 may transmit information on the mapping manner to the terminal node. The transmitting device 803 may transmit the information in any proper manner, which will not be described in detail herein.

FIG. 9 illustrates a structure of a communication device in a radio communication system according to one embodiment. The communication device 900 is configured in a terminal node in the communication system.

As shown in FIG. 9, the communication device 900 comprises a receiving device 901 and a processing device 903.

For example, the communication device 900 may adopt the method described above with reference to FIGS. 1-7. Specifically, the receiving device 901 may receive information on classification of configuration of enhanced control channel elements transmitted from a base station in the communication system. As stated above, the configuration of enhanced control channel elements may comprise number of resource elements in each enhanced control channel element and number of enhanced control channel elements in each physical resource block pair and the like, and the configuration of enhanced control channel elements is classified into a plurality of classifications which respectively correspond to different system configurations of the communication system, which will not be repeatedly described herein.

The processing device 903 may be used for performing demodulation for the enhanced control channel elements according to the classification of the configuration of enhanced control channel elements. Specifically, upon obtainment of the information on the classification of the eCCE configuration from the base station, the processing device 903 may query configuration information corresponding to the classification, in information on a plurality of pre-stored configurations of the eCCEs, according to the classification, and perform demodulation for the eCCEs according to the configuration information.

As a detailed example, the configuration of control channel elements may be classified into 4 classifications (for example, as shown in the above Table 3 or Table 4, when the DMRS uses four ports, the configuration is classified into Classifications 1-4; or when the DMRS uses two ports, the configuration is classified into Classifications 5-8). In this case, if information for indicating the classification of the configuration of enhanced control channel elements is packaged by the base station into a signaling (a first signaling) of 2 bits, the receiving device 901 may receive the first signaling, and parses the first signaling by the processing device 903, thereby obtaining information for indicating the classification of the configuration of enhanced control channel elements, thereby performing demodulation for enhanced control channel elements.

As an example, the terminal node may obtain information on the classification of the eCCE configuration by a Physical control format indication channel (PCFICH). The receiving device 901 may receive information on physical control format indication channel. The processing device 903 may calculate number of resource elements usable to carry the enhanced physical downlink control channel based on the information on physical control format indication channel, and obtain the classification of the configuration of enhanced control channel elements by querying a pre-stored table containing configurations of enhanced control channel elements.

As a detailed embodiment, the receiving device 901 may further receive information on a mapping manner of enhanced control channel elements in a physical resource block pair from the base station.

As a detailed example, in a case where a plurality of enhanced channel control elements of each physical resource block pair is mapped into the plurality of resource elements in a diagonally arranged pattern, the processing device 903 may contiguously demodulate a plurality of resource elements in the physical resource block pair in a diagonally arranged pattern to obtain the respective enhanced channel control elements.

As an example, unoccupied resource elements in the physical resource block pair may be mapped in a uniformly distributed pattern, following each enhanced control channel element. In this case, the processing device 903 vacates and does not demodulate the unoccupied resource elements after performing the demodulation for each enhanced control channel element. As another example, unoccupied resource elements in the physical resource block pair may be mapped in a uniformly distributed pattern, preceding each enhanced control channel element. In this case, the processing device 903 skips the unoccupied resource elements after performing the demodulation for each enhanced control channel element.

As a detailed embodiment, the enhanced physical downlink control channel may be mapped into one physical resource block pair in a localized manner, or may be mapped into a plurality of physical resource block pairs in a distributed manner. Correspondingly, in the localized manner, the processing device 903 may perform demodulation for enhanced control channel elements in one physical resource block pair in a localized manner to obtain an enhanced physical downlink control channel; and in the distributed manner, the processing device 903 may perform demodulation for enhanced control channel elements in a plurality of physical resource block pairs to obtain an enhanced physical downlink control channel.

According to one embodiment, a wireless communication system is further provided. The system comprises a base station and a terminal node, and the base station comprises a communication device (for example 800) configured at a base station side as described above, and the terminal node comprises a communication device (for example 900) configured at a terminal node side as described above.

It should be understood that the above embodiments and examples are illustrative but not enumerative. The disclosure shall not be regarded as being limited to any detailed embodiment or example. In addition, in the above embodiments and examples, steps or a method or modules of a device are represented by reference numerals. As should be understood by a person skilled in the art, these reference numerals aim only to distinguish these steps or modules in terms of wording, but do not represent an order thereof or any other definition.

As an example, the respective steps of the above method and the respective composite modules and/or devices of the above device may be carried out as software, firmware, hardware or combinations thereof. The respective composite components, elements and sub-elements in the above device may be configured by means of software, hardware or combinations thereof. The specific means or manners for the configuration are well-known to a person skilled in the art, and will not be repeatedly described herein.

The disclosure further proposes a program product. When the instruction code is read and executed by a machine, the above communication method according to the embodiment of the disclosure may be executed.

Correspondingly, a storage medium for carrying the program product storing machine-readable instruction code is also included in the disclosure. The storage medium includes but is not limited to a soft disk, a hard disk, a magnetooptical disk, a storage card, a storage rod, etc.

In the above descriptions of the detailed embodiments of the disclosure, features described and/or shown for one embodiment may be used in an identical or similar manner in one or more other embodiments, be combined with features in other embodiments, or replace features in other embodiments.

It should be emphasized that: the term "comprise/include" used in the disclosure refers to existence of features, elements, steps or assemblies, without excluding existence or addition of one or more other features, elements, steps or assemblies.

In addition, the method according to the disclosure is not limited to be carried out according to the temporal order described in the Description, but may also be carried put according to other temporal orders, in parallel or independently. Therefore, the order of carrying out the method described in the Description fails to constitute a limitation to the scope of the technique of the disclosure.

Although the disclosure has been described above by describing the detailed embodiments of the disclosure, it should be understood that a person skilled in the art can carry out various modifications, improvements or equivalents for the disclosure within the spirit and scope of the appended claims. These modifications, improvements or equivalents shall also be regarded as being included within the scope of protection of the disclosure.

## Claims

1. A communication method for use in a wireless communication system, comprising:

   determining, by a base station in the communication system, a classification of a configuration of enhanced control channel elements in an enhanced physical downlink control channel according to a current system configuration of the communication system, wherein the configuration of enhanced control channel elements comprises the number of resource elements in each enhanced control channel element and the number of enhanced control channel elements in each physical resource block pair, and wherein the configuration of enhanced control channel elements is classified into a plurality of classifications which respectively correspond to different system configurations of the communication system; and

   notifying a terminal node in the communication system of information on the determined classification of the configuration of the enhanced control channel elements.

2. The communication method of claim 1, wherein the system configuration comprises the number of OFDMA symbols carried by the physical downlink control channel and the number of reference signal ports.

3. The communication method of claim 1, wherein the configuration of the enhanced control channel elements is classified into 4 classifications respectively corresponding to different system configurations of the communication system.

4. The communication method of claim 3, wherein notifying the terminal node of the information on the determined classifications of the configuration of the enhanced control channel elements comprises: packaging the information on the determined classifications of the configuration of the enhanced control channel elements into a first signaling of 2 bits; and transmitting the first signaling to the terminal node.

5. The communication method of any of claims 1-4, wherein determining the classification of the configuration of the enhanced control channel elements comprises:

   determining the classification of the configuration of the enhanced control channel elements according to the number of resource elements in one physical resource block pair available to carry the enhanced physical downlink control channel, wherein:

   in a first classification, each enhanced control channel element comprises 32 or 34 resource elements, and each physical resource block pair carries 4 enhanced control channel elements;
   in a second classification, each enhanced control channel element comprises 30 or 32 resource elements, and each physical resource block pair carries 4 enhanced control channel elements;
   in a third classification, each enhanced control channel element comprises 36 or 38 resource elements, and each physical resource block pair carries 3 enhanced control channel elements; and
   in a fourth classification, each enhanced control channel element comprises 30 or 33 resource elements, and each physical resource block pair carries 3 enhanced control channel elements.

6. The communication method of claim 4, wherein the first signaling is an extension of an existing physical downlink control channel signaling or an enhanced physical downlink control channel signaling.

7. The communication method of claim 4, wherein transmitting the first signaling to the terminal node comprises:

transmitting the first signaling to the terminal node by using an unoccupied resource element in the enhanced physical downlink control channel.

8. The communication method of any of claims 1-4, further comprising:

for each physical resource block pair, mapping a plurality of enhanced channel control elements into a plurality of resource elements of the physical resource block pair, wherein the plurality of enhanced channel control elements of the physical resource block pair are contiguously mapped into the plurality of resource elements according to a diagonally arranged pattern.

9. The communication method of claim 8, wherein unoccupied resource elements in the physical resource block pair are mapped, according to a uniformly distributed pattern, preceding or following each enhanced control channel element.

10. The communication method of claim 8, wherein the enhanced physical downlink control channel is mapped into one physical resource block pair in a localized manner or mapped into a plurality of physical resource block pairs in a distributed manner.

11. A communication method for use in a wireless communication system, comprising:

receiving, by a terminal node in the communication system from a base station in the communication system, information on classification of configuration of enhanced control channel elements, wherein the configuration of enhanced control channel elements comprises the number of resource elements in each enhanced control channel element and the number of enhanced control channel elements in each physical resource block pair, and wherein the configuration of enhanced control channel elements is classified into a plurality of classifications which respectively correspond to different system configurations of the communication system; and
performing demodulation for the enhanced control channel elements according to the classification of the configuration of enhanced control channel elements.

12. The communication method of claim 11, wherein receiving the information on the classification of the configuration of enhanced control channel elements comprises:

receiving a first signaling of 2 bits in which the information on the classification of the configuration of enhanced control channel elements is packaged.

13. The communication method of claim 11, wherein receiving the information on the classification of the configuration of enhanced control channel elements comprises:

receiving information on physical control format indication channel,
calculating the number of resource elements available to carry the enhanced physical downlink control channel based on the information on physical control format indication channel, and
obtaining the classification of the configuration of enhanced control channel elements by querying a pre-stored table containing configurations of enhanced control channel elements.

14. The communication method of any of claims 11-13, wherein the configuration of enhanced control channel elements is classified into 4 classifications.

15. The communication method of claim 14, wherein:

in a first classification, each enhanced control channel element comprises 32 or 34 resource elements, and each physical resource block pair carries 4 enhanced control channel elements;

in a second classification, each enhanced control channel element comprises 30 or 32 resource elements, and each physical resource block pair carries 4 enhanced control channel elements;

in a third classification, each enhanced control channel element comprises 36 or 38 resource elements, and each physical resource block pair carries 3 enhanced control channel elements; and

in a fourth classification, each enhanced control channel element comprises 30 or 33 resource elements, and each physical resource block pair carries 3 enhanced control channel elements.

16. The communication method of any of claims 11-13, wherein the terminal node contiguously demodulates a plurality of resource elements in the physical resource block pair in a diagonally arranged manner to obtain the respective enhanced control channel elements.

17. The communication method of claim 16, wherein unoccupied resource elements in the physical resource block pair are mapped, according to a uniformly distributed pattern, following each enhanced control channel element, and wherein the terminal node skips the unoccupied resource elements after performing the demodulation for each enhanced control channel element, or

unoccupied resource elements in the physical resource block pair are mapped, according to a uniformly distributed pattern, preceding each enhanced control channel element, and wherein the terminal node skips the unoccupied resource elements before performing the demodulation for each enhanced control channel element.

18. The communication method of claim 16, wherein the terminal node performs demodulation for enhanced control channel elements in one physical resource block pair in a localized manner to obtain an enhanced physical downlink control channel, or the terminal node performs demodulation for enhanced control channel elements in a plurality of physical resource block pairs to obtain an enhanced physical downlink control channel.

19. A communication apparatus for use in a wireless communication system, configured in a base station of the communication system and comprising:

a configuration classification determining device configured to determine a classification of configuration of enhanced control channel elements in an enhanced physical downlink control channel according to current system configuration of the communication system, wherein the configuration of enhanced control channel elements comprises the number of resource elements in each enhanced control channel element and the number of enhanced control channel elements in each physical resource block pair, and wherein the configuration of enhanced control channel elements is classified into a plurality of classifications which respectively correspond to different system configurations of the communication system; and

a transmitting device configured to notify a terminal node in the communication system of information on the determined classification of the configuration of enhanced control channel elements.

20. A communication apparatus for use in a wireless communication system, configured in a terminal node of the communication system and comprising:

a receiving device configured to receive information on classification of configuration of enhanced control channel elements transmitted from a base station in the communication system, wherein the configuration of enhanced control channel elements comprises the number of resource elements in each enhanced control channel element and the number of enhanced control channel elements in each physical resource block pair, and wherein the configuration of enhanced control channel elements is classified into a plurality of classifications which respectively correspond to different system configurations of the communication system; and

a processing device configured to perform demodulation for the enhanced control channel elements according to the classification of the configuration of enhanced control channel elements.

21. A communication method for use in a wireless communication system, comprising:

determining, by a base station in the communication system, a classification of configuration of enhanced control channel elements in an enhanced physical downlink control channel according to current system configuration of the communication system, wherein the configuration of enhanced control channel elements comprises the number of resource elements in each enhanced control channel element and the number of enhanced control channel elements in each physical resource block pair, and wherein the configuration of enhanced control channel elements is classified into a plurality of classifications which respectively correspond to different system configurations of the communication system;

notifying, by the base station, a terminal node in the communication system of information on the determined classification of the configuration of enhanced control channel elements;

receiving, by the terminal node, the information on the classification of the configuration of enhanced control channel elements transmitted from the base station; and

performing, by the terminal node, demodulation for the enhanced control channel elements according to the classification of the configuration of enhanced control channel elements.

22. A wireless communication system, comprising a base station and a terminal node, wherein the base station comprises:

a configuration classification determining device configured to determine a classification of configuration of enhanced control channel elements in an enhanced physical downlink control channel according to current system configuration of the communication system, wherein the configuration of enhanced control channel elements comprises the number of resource elements in each enhanced control channel element and the number of enhanced control channel elements in each physical resource block pair, and wherein the configuration of enhanced control channel elements is classified into a plurality of classifications which respectively correspond to different system configurations of the communication system; and

a transmitting device configured to notify a terminal node in the communication system of information on the determined classification of the configuration of enhanced control channel elements, and

wherein the terminal node comprises:

a receiving device configured to receive the information on the classification of the configuration of enhanced control channel elements transmitted from the base station; and

a processing device configured to perform demodulation for the enhanced control channel elements according to the classification of the configuration of enhanced control channel elements.

Determining the classification of an eCCE configuration in corresponding ePHCCH accordingto current system configuration — 102

Transmitting the information on the determined classification of the eCCE configuration to a terminal node — 104

Fig.1

```
                              ┌─ 202-1
                    ╱─────────┴──────────╲
                   ╱      Whether the      ╲        Y
                  ⟨ number of REs usable tocarry ePDCCHs⟩──────────────┐
                   ╲   is between 144 and 128?  ╱                      │
                    ╲──────────┬──────────╱                            ▼
                               │                         ┌─ 202-2
                               │ N                ┌───────┴──────────────────┐
                               │                  │  Determining to use an eCCE │
                               ▼                  │ configuration of Classification 1 │
                    ╱──────────┴──────────╲       └─────────────┬─────────────┘
                   ╱     ┌─ 202-3           ╲                   │
                  ⟨  Whether the number of REs ⟩      Y      To Step 204-1
                  ⟨ usable to carry ePDCCHs is between⟩──────────────┐
                   ╲     126 and 120?      ╱                         │
                    ╲──────────┬──────────╱                          ▼
                               │                         ┌─ 202-4
                               │ N                ┌───────┴──────────────────┐
                               │                  │  Determining to use an eCCE │
                               ▼                  │ configuration of Classification 2 │
                    ╱──────────┴──────────╲       └─────────────┬─────────────┘
                   ╱     ┌─ 202-5           ╲                   │
                  ⟨  Whether the number of REs ⟩      Y      To Step 204-1
                  ⟨ usable to carry ePDCCHs is between⟩──────────────┐
                   ╲     114 and 108?      ╱                         │
                    ╲──────────┬──────────╱                          ▼
                               │                         ┌─ 202-6
                               │ N                ┌───────┴──────────────────┐
                               │                  │  Determining to use an eCCE │
                               ▼                  │ configuration of Classification 3 │
                  ┌────────────────────┐          └─────────────┬─────────────┘
                  │ Determining to use an eCCE │  ┌─ 202-7       │
                  │ configuration of Classification 4 │          │
                  └──────────┬─────────┘                         │
                             │                                   │
                             ▼                                   ▼
              ┌──────────────────────────────────────────┐
              │ Packaging the information on the determined classification │  ┌─ 204-1
              │ of the eCCE configuration into a signaling │
              │ of a size of 2 bits                        │
              └──────────────────┬───────────────────────┘
                                 ▼
              ┌──────────────────────────────────────────┐
              │ Transmitting the signaling of 2 bits to the terminal node │  ┌─ 204-2
              └──────────────────┬───────────────────────┘
                                 ▼
```

Fig.2

Receiving information on the classification of an
eCCE configuration in ePDCCH which corresponds
to current system configuration ⎯ 302

Receiving information on a mapping
manner of eCCEs in a PRB pair ⎯ 306

Performing eCCE demodulation according to the
eCCE configuration or the like ⎯ 304

Fig.3

Receiving PCFICH information ⎯ 402-1

Calculating the number of REs usable to carry
ePDCCHs according to the PCFICH information ⎯ 402-2

obtaining an eCCE configuration corresponding
to current system configuration by querying
a pre-stored eCCE configuration table ⎯ 402-3

Fig.4

Time →

Frequency ↓

RE

CRS
PDCCH
DM-RS

Fig.5

Determining the mapping manner of the eCCEs in the PRB pair — 606

Transmitting the information on the determined mapping manner to the terminal node — 608

Fig.6

Fig.7

800

Configuration
classification
determining
device
**801**

Transmitting
device
**803**

Mapping manner
device
**805**

Fig.8

900

Receiving
device
**901**

Processing
device
**903**

Fig.9

# INTERNATIONAL SEARCH REPORT

| International application No. |
|---|
| PCT/CN2013/074564 |

### A. CLASSIFICATION OF SUBJECT MATTER

H04W 72/04 (2009.01) i

According to International Patent Classification (IPC) or to both national classification and IPC

### B. FIELDS SEARCHED

Minimum documentation searched (classification system followed by classification symbols)

IPC: H04W, H04Q, H04B

Documentation searched other than minimum documentation to the extent that such documents are included in the fields searched

Electronic data base consulted during the international search (name of data base and, where practicable, search terms used)

CPRSABS, CNTXT, CNKI, VEN: control w channel, control w channel w element, enhanced, extended, PDCCH, downlink, control s channel, CCE, eCCE, ePDCCH, size, number

### C. DOCUMENTS CONSIDERED TO BE RELEVANT

| Category* | Citation of document, with indication, where appropriate, of the relevant passages | Relevant to claim No. |
|---|---|---|
| X | CN 102256358 A (CHINA ACADEMY OF TELECOMMUNICATIONS TECHNOLOGY) 23 November 2011 (23.11.2011) see description, paragraphs [0049]-[0052], [0062]-[0073] and figure 4 | 1-22 |
| A | CN 102461001 A (SAMSUNG ELECTRONICS CO LTD) 16 May 2012 (16.05.2012) the whole document | 1-22 |
| A | CN 102355732 A (CHINA ACADEMY OF TELECOMMUNICATIONS TECHNOLOGY) 15 February 2012 (15.02.2012) the whole document | 1-22 |

☐ Further documents are listed in the continuation of Box C.      ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&"document member of the same patent family |

| Date of the actual completion of the international search | Date of mailing of the international search report |
|---|---|
| 12 July 2013 (12.07.2013) | 08 August 2013 (08.08.2013) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>MENG, Wenting<br><br>Telephone No. (86-10) 62411434 |

Form PCT/ISA /210 (second sheet) (July 2009)

**INTERNATIONAL SEARCH REPORT**
Information on patent family members

International application No.

PCT/CN2013/074564

| Patent Documents referred in the Report | Publication Date | Patent Family | Publication Date |
|---|---|---|---|
| CN 102256358 A | 23.11.2011 | WO 2013007144 A1 | 17.01.2013 |
| CN 102461001 A | 16.05.2012 | US 2010260059 A1 | 14.10.2010 |
| | | WO 2010120106 A2 | 21.10.2010 |
| | | EP 2420008 A2 | 22.02.2012 |
| | | KR 20120019447 A | 06.03.2012 |
| | | US 8369885 B2 | 05.02.2013 |
| | | WO 2010120106 A3 | 27.01.2011 |
| | | JP 2012524451 A | 11.10.2012 |
| CN 102355732 A | 15.02.2012 | WO 2013023541 A1 | 21.02.2013 |

Form PCT/ISA /210 (patent family annex) (July 2009)